# EUROPEAN PATENT SPECIFICATION

(11) **EP 3 736 784 B1**
(45) Date of publication and mention of the grant of the patent: **14.12.2022**
(21) Application number: 20382333.1
(22) Date of filing: 24.04.2020
(51) Int. Cl.: G07F 9/02, G06F 3/02, H01H 13/14

(54) **DIGITAL VISIBILITY DEVICE FOR VENDING MACHINES**
DIGITALES SICHTGERÄT FÜR VERKAUFSAUTOMATEN
DISPOSITIF DE VISIBILITÉ NUMÉRIQUE POUR DISTRIBUTEURS AUTOMATIQUES

(30) Priority: 30.04.2019 EP 19382324
(43) Date of publication of application: 11.11.2020
(73) Proprietor: Muxunav, S.L., 31699 Olloki (Navarra) (ES)
(72) Inventor: TORRES LOPEZ, Antonio, 31699 OLLOKI (Navarra) (ES)
(74) Representative: Herrero & Asociados, S.L.

(56) References cited:
- US-A1- 2006 221 059
- US-B1- 10 153 103

## Description

### Object of the invention

The present invention belongs to the technical field of the advertising devices applied in vending machines.

The object of the present invention is to provide a multimedia visibility or button device for vending machines existing on the market. The multimedia button device allows displaying multimedia content associated with the products of the vending machine.

### Background of the invention

Vending machines existing on the market comprise doors with buttons which allow the selection of products by means of pushing said buttons. These buttons normally include plastic labels identifying the product. Said plastic label can be located inside the push-button and moves together with said push-button when said button is pushed to select the product. In other existing models in the market, the labels do not move with the button and the selection of the product is carried out by means of additional buttons or combinations of letters and numbers, but it is equally necessary that there are labels for the identification of the product except in the machines where the product to be expended is directly visualised. These labels are usually highly polluting and involve certain maintenance since they have to be switched due to constant updates to product image, new brands, product replacement, machine design update, or simple deterioration of the label. Additionally, in the current high-tech era, new forms of presenting information which appeal to consumers in addition to being informative are needed. Therefore, the present invention solves the mentioned drawbacks, among others. Buttons not involving labels but involving a small display are known from US10153103 and US2006221059 however the construction involved is more complex than applied in the present invention.

### Description of the invention

The present invention relates in a first aspect to a multimedia button device which replaces or is added to the plastic labels by way of conventional buttons of vending machines. The multimedia buttons of the device according to the present invention intend to overcome the lack of appeal of most vending machines and the lack of connectivity and control thereof, as well as to improve the approach to work on these machines as traveling for maintenance or for replacing said vending machines existing on the market is drastically reduced. Therefore, one of the advantages of the present invention is the reduction of travel for replacing the same and the replacement of the polluting plastic labels. Furthermore, the use of displays would improve the appeal of the machines, which would undoubtedly be a factor in increasing sales.

Therefore, in a first aspect, the multimedia button device for vending machine is located on a push-button of a vending machine, the multimedia button comprises a display and a printed circuit board comprising two alternatives:
In a first alternative, the printed circuit board comprises a central contact area for activating the push-button of the vending machine, wherein a force applied on the button causes the activation of the push-button by means of the contact of the circuit printed board with said push-button through the contact area.
In a second alternative, the printed circuit board comprises a central orifice, wherein a force applied on the button causes the activation of the push-button by means of the contact of the display with said push-button through the central orifice.

Furthermore, an actuation area between the display and the push-button is defined wherein the display actuates the push-button. Therefore, in a third alternative, the printed circuit board is located out of the actuation area, and a force applied on the button causes the activation of the push-button by means of the contact of the display with said push-button. In a particular embodiment, the printed circuit board of the third alternative may comprise flexible material.

Furthermore, in some embodiments, the multimedia button device may comprise a push detector located between the push-button and the display, or in contact with the display or in contact with the printed circuit board, and which enables the push of the multimedia button to be registered.

In the same manner, the present invention allows achieving individual control over each of the displays of the multimedia buttons, rendering them interchangeable and independent for displaying images, videos, or any type of multimedia information. Additionally, several displays can be used by way of mosaic or complex video using several displays for the reproduction of multidisplay videos, without excluding other configurations.

Additionally, the multimedia button of the device for vending machines is characterised in that it comprises an open quadrangular casing comprising a transparent face, an inner frame, and fixing means located on opposite sides of the casing, a display such as a TFT or LCD for example, without excluding other display technologies, and a printed circuit board. The printed circuit board comprises a contact area for activating a push-button of a vending machine existing on the market. This contact area can be protected by a plastic surface coupled to the button, with shellac, rubber, metal or any other material protecting this activation area. In the case of the second alternative, where the activation area of the push-button is carried out by means of the display surface itself, said surface could comprise a plastic, metallic or any other material protection.

In some examples, the casing additionally comprises an actuator element where the force applied on the button causes the activation of the push-button by means of contact of the actuator element with said push-button. The actuator element can be a tab or a protuberance, for example.

The assembly formed by the display and the printed circuit board can be positioned on the inner frame of the casing. The display is fixed to the inner frame by means of the fixing means, such that the display is facing the transparent face of the casing and the printed circuit board is facing the push-button. A force applied by a user on the multimedia button causes the activation of the push-button of the vending machine by means of contact of the printed circuit board or the same display with said push-button through the contact area of the printed circuit board. Activation of the push-button causes the selection of a product associated with the vending machine.

In a preferred embodiment, the fixing means comprise two clips established in a manner adjacent to two windows which facilitate the clipping of the display, without excluding other clipping or fixing possibilities. The casing may comprise, for example, between 30 and 40 mm in width and between 10 and 60 mm in height, and two clamping cylinders as a preferred embodiment which enable the button to be clamped to the cigarette vending machine and allow horizontal movement in perpendicular sense to the plane of the door of the cigarette vending machine (that is, it can act as guide) preventing the lateral horizontal movement (that is, from left to right) in the plane of the door of the cigarette vending machine. Any other morphology equivalent to the cylinders could be included as other forms of clamping, or movement to the machine. The printed circuit board comprises computer media for projecting images and/or video on the displays of the multimedia buttons.

Therefore, a main aspect of the present invention seeks to (completely or partially) replace the plastic labels with multimedia buttons comprising TFT displays, LCD displays, or equivalent (or simply displays) for showing product animations and/or images in a more appealing manner, with more light, content control, etc.

Another advantage of the multimedia buttons according to the present invention refers to the replacement of the polluting plastic labels with displays, further saving in the approach to label replacing every time there is an aesthetic change in the brand or change in product associated with a multimedia button.

Therefore, the multimedia buttons can be associated with any product being advertised and/or any point of sale, such as, for example, vending machines. Advantageously, the multimedia buttons according to the present invention allow updating the machines already operating on the market without having to replace them with new models. Said buttons are a design that can be applied, for example, in tobacco vending machines. Today, vending machines of this type include conventional buttons where a plastic label with the information about the brand of tobacco is inserted in said buttons, or in visible places in the vending machine. When selecting the product, the user pushes the button and the button actually moves and pushes the internal push-button of the machine, actuating it and obtaining the pack of tobacco. Vending machines of any other type could be improved with the multimedia buttons according to the present invention, even those where the button is not the one actuating the internal push-button of the machine.

Therefore, the replacement of said plastic label with a configurable display is achieved, such that the information in the button can be switched without having to open the machine or replace the label, and allowing the display of several images of the product and/or videos. In another alternative embodiment, the information of the button can be changed by opening the vending machine and changing the SD card which stores the multimedia content (for example, videos) associated to the multimedia button. Said displays can be configured by a master controller without having to open the machine, as described below:
A second aspect of the present invention relates to a multimedia system for vending machines. The multimedia system is characterised in that it comprises a set of multimedia buttons according to the first aspect of the invention, a master controller for the configuration of the set of multimedia buttons, and guided transmission means for communication between the master controller and the set of multimedia buttons and between the master controller and a central computing unit of the vending machine.

In another preferred embodiment, the set of multimedia buttons may comprise a matrix of up to several rows and columns of multimedia buttons. Particularly, the set of multimedia buttons comprises between 1 and 16 rows of multimedia buttons and between 1 to 16 multimedia buttons for each row.

Moreover, the vending machine may comprise transmission means and multiple redirection circuits of serial port information such as for example multiplexers, wherein each multiplexer circuit can connect to up to 7 multimedia buttons. Additionally, the master controller comprises wireless transmission means which allow the wireless connectivity of the master controller to a remote server.

The multimedia system for vending machines according to the present invention, as a result of the master controller in communication with the multimedia buttons and the computing unit of the vending machine, allows carrying out two-way telemetry for controlling product stock, managing incidents, malfunctions, and any data contained in the central computing unit of the vending machine, without excluding any other standard functionalities in the operation of the vending sector. The master controller can access any data of the point of sale wherein it has been installed and the operation of the machine is neither modified nor altered.

Wireless connectivity enables the machine park to be remotely managed. The installation of the multimedia buttons as well as of the master controller according to the present invention is possible for all vending machines regardless of the manufacturer thereof.

The multimedia system according to the second aspect of the present invention is adapted to existing machines, so in some cases, and only in some configurations of interactive buttons, depending on the location place of the buttons, the amount of buttons or the condition or model of the same machine where they are installed, it is necessary to apply a method of installation in said machines, so a method of installation in said machines must be developed. The method may comprise the following steps:
**Step 1**: Separating the door from the vending machine between 1-30 millimetres. The separation is from the selection keypad assembly towards the inside of the machine. This assembly is initially in contact with the frame of the door of the machine. There are two reasons for said separation: to remove the cables of the redirection system of serial port information as can be multiplexer circuits as well as to correctly push the keypad with the multimedia buttons housed by the TFT displays. In some examples, this step includes the design of separating washers to be included in screws of the hinges of the vending machine door, for the purpose of separating the front part thereof from the body thereof and so that the multimedia buttons (which take up more space than the label) do not actuate all the internal push-buttons of the machine when closing. In a preferred embodiment, in case that the multimedia buttons to be installed are few or even only 1, normally it will not be necessary to perform steps 1, 3 or 4, as the cables can be taken out through grooves or orifices already present in the machines. In relation to the multimedia button, this could be located in the top portion for example or in the sides without excluding any other positioning in the machine.
**Step 2:** Replacing the original buttons with the multimedia buttons in case that the identifying labels are located on the original buttons and further connect the electric circuit of the buttons to the signal adaptor or to a standard power outlet.
**Step 3:** Fixing the support circuits and the redirection circuit of serial port information (although said circuits may comprise any redirection system of serial port information) to the original structure of the buttons of machines known in the market. In the case of machines designed for outdoor operation, circuits are fixed to a plastic structure over which the original buttons pivot. The buttons may be supported by an additional structure for fixing the redirection circuit of serial port information, for example, multiplexer. The fixing can be carried out on said structure with an anchoring such as, for example, a clip, clamp, or adhesive fixing type anchor, without excluding other anchoring types.
**Step 4:** Replacing the original lock on known machines with a customised part expressly designed for locking the door of the vending machine. The design of the part achieves not having to modify the anchoring point and the correct closing of door that was moved in step 1 between 1 and 30 millimeters. The original anchoring point of the lock is designed so that the door of the vending machine has not been separated from the structure of the vending machine. By moving the door of the vending machine a predetermined distance, it may be necessary to change the original lock to another Z-type profile lock which compensates for this movement. In other alternative embodiment, in step 4, the anchoring point is separated with the same separation using the same washers than in the set of buttons.

### Description of the drawings

To complement the description that is being made and for the purpose of helping to better understand the features of the invention according to a preferred exemplary embodiment thereof, a set of drawings is attached as an integral part of said description in which the following is depicted in an illustrative and non-limiting manner:
Figure 1 shows a first view of the casing of the multimedia button according to the present invention.
Figure 2 shows a second view of the casing of the multimedia button according to the present invention.
Figure 3 shows a third view of the casing of the multimedia button according to the present invention.
Figure 4 shows the assembly formed by a display and a printed circuit board.
Figures 5A and 5B show the assembly of Figure 4 with examples of printed circuit boards comprising a contact area.
Figure 6A shows the embodiment of a multimedia button, wherein the printed circuit board comprises an orifice.
Figure 6B shows another embodiment alternative of the multimedia button.
Figures 7A and 7B show embodiments according to the present invention in combination with a push detector.
Figure 8 shows a set of push-buttons of a vending machine on the market.

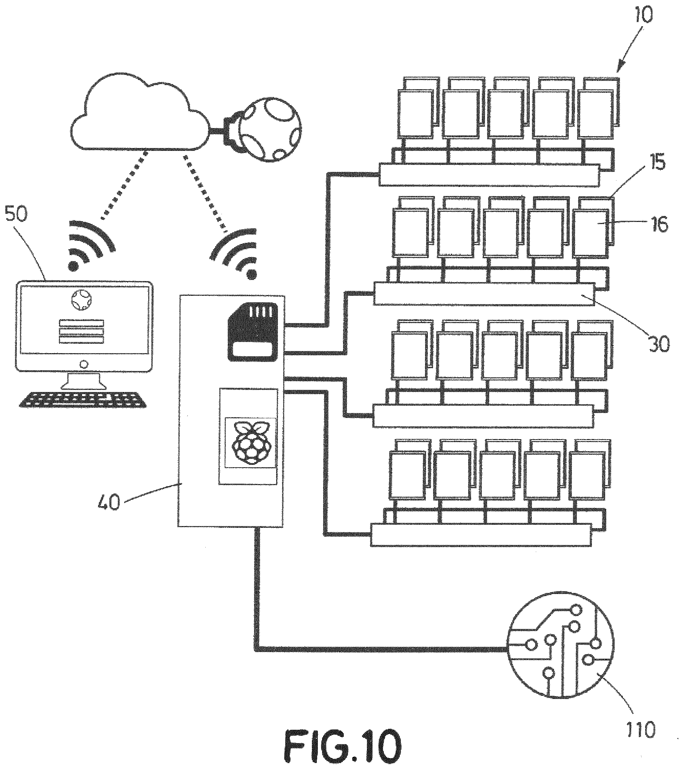

Figures 9 and 10 show a multimedia system according to the present invention.

### Preferred embodiment of the invention

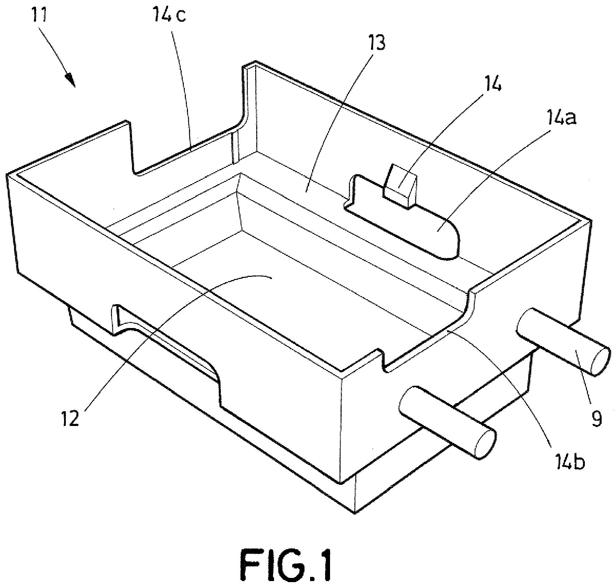

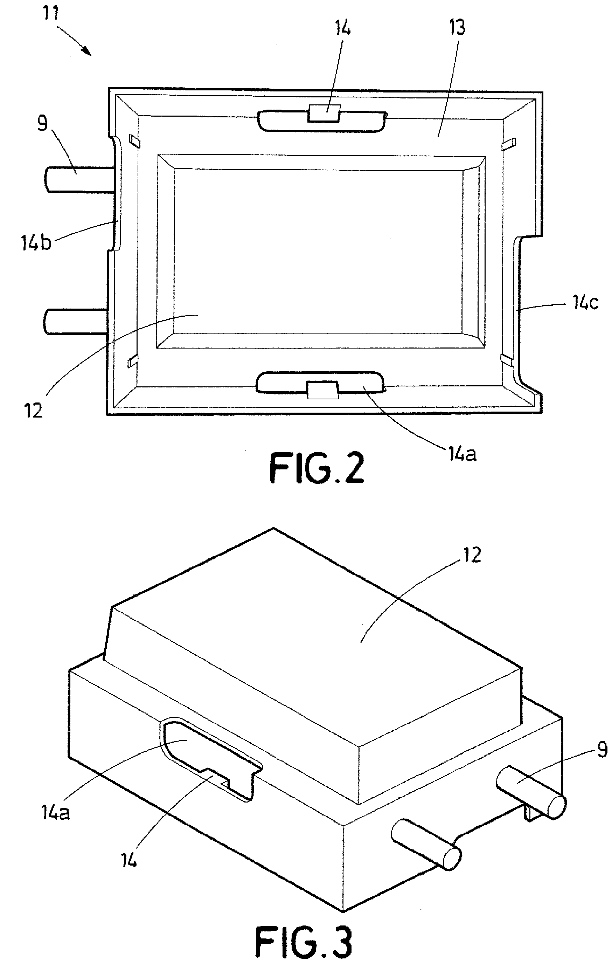

Figures 1, 2, and 3 show a preferred embodiment of a casing (11) as part of a multimedia button device (10) according to the present invention. The casing (11) is an open quadrangular casing comprising a transparent face (12), an inner frame (13), and fixing means located on opposite sides of the casing (11). The fixing means comprise two clips (14).

The casing (11) is designed to house a 2" (37.56 x 51.1) mm (width x height) display, this display being chosen because it is the largest one that can be introduced in the button, in this embodiment. However, these dimensions do not exclude other greater or smaller measurements. Display size limitations can be set by the geometry of the vending machine.

Additionally, the casing (11) comprises two clamping cylinders (9), without excluding another embodiment by way of pivot, for example, a single pivot, which enable the button (10) to be clamped to the vending machine. The display may be clipped with two clips (14) located on the sides having the largest dimensions (right side and left side of the casing (11)). The objective of the clips (14) is to press the display, in other words, to fix the position of the display against the inner frame (13) of the casing (11), facing the transparent face (12), and secure the positioning of the display.

The printed circuit board, which also acts as a push-button, is located in the back part of the display. For this reason, it is important for the positioning of the display to be the one conceived in the design and for it to be modified during transport of the material or with use of the button.

The choice of clips (14) in the "longest" sides (right side and left side) of the casing (11) has the function of being able to unclip the display. These two longest sides have two cuts or windows (14a) adjacent to the clips (14). Said windows (14a) have two functions:
1) To facilitate putting the display in and taking it out: Since the side wall where the side windows (14a) are located has less mass and a weaker attachment with the rest of the casing (11), it is more "deformable".
2) To facilitate placement in the metal mould for moulding the casing (11) of the clips (14), which means that the metal mould is simpler, more robust, and more cost-effective.

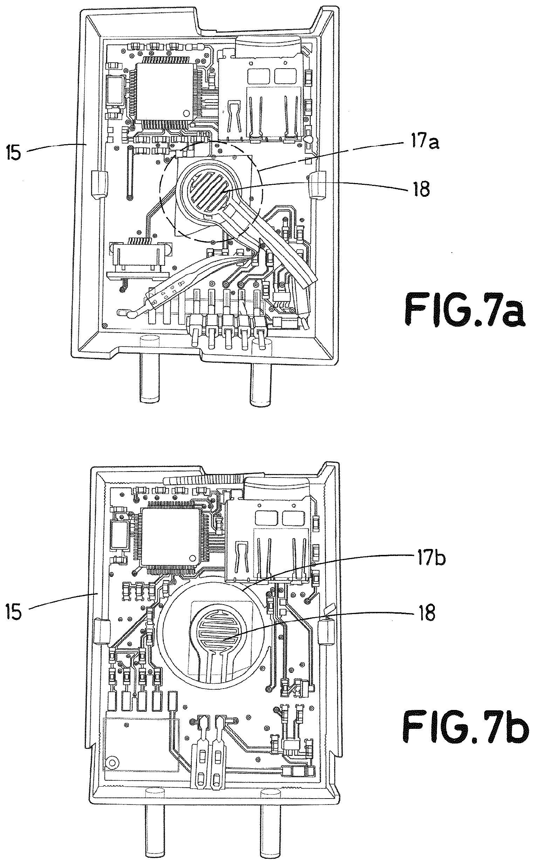

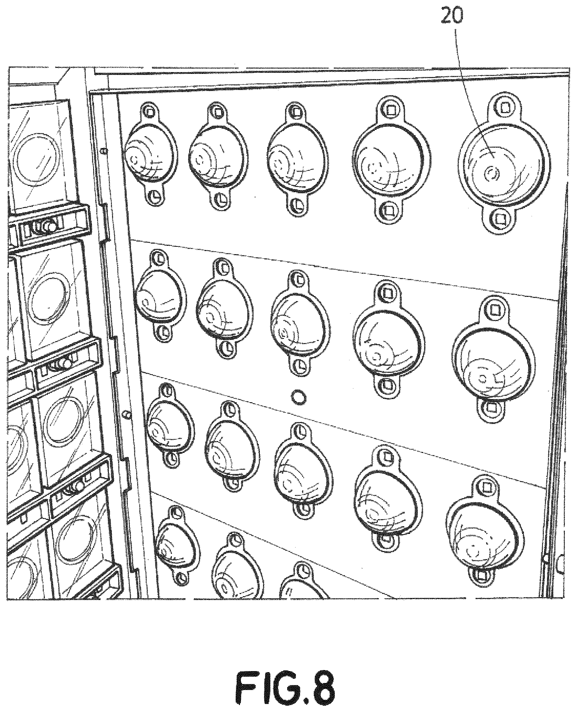

Additionally, the casing (11) comprises a lower opening or cut (14b) located next to the positioning cylinders or legs. The lower cut (14b) is used to guide the flat connection cable between the display and a multiplexer circuit, which is depicted in Figures 7 and 8.

Additionally, the casing (11) comprises an upper opening or cut (14c) which allows the introduction of a SD memory card associated with the printed circuit board.

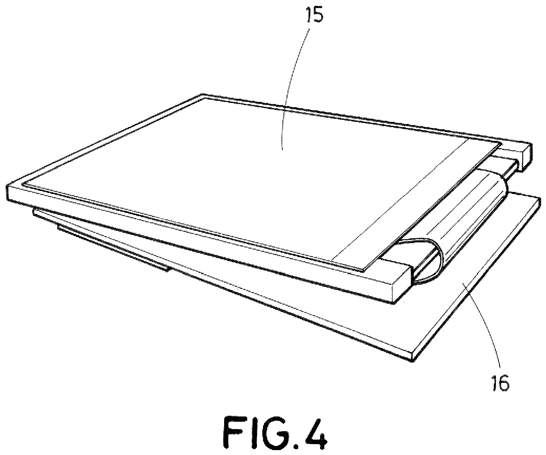

Figure 4 shows the assembly formed by a display (15) and a printed circuit board (16). The display (15) can be a TFT display, LCD display, or similar. The printed circuit board (16) is located in the rear part of the display (15) the two elements making up an assembly which is arranged on the inner frame (13) of the casing (11).

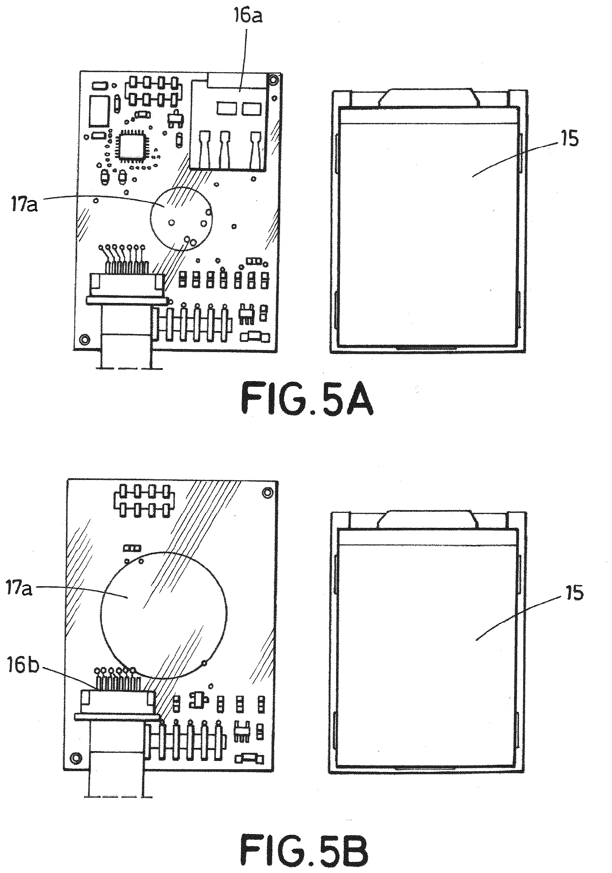

Figures 5A and 5B show two examples of the first alternative of printed circuit boards (16a) and (16b) respectively, both of which comprise a contact area.

Moreover, in order to be able to insert the display (15) and the printed circuit boards (16a, 16b) (which are not flexible), the rear part of the casing (11) is open as seen in Figures 1 to 3 (in contrast with conventional buttons, which have a small groove through which a label is slid). This causes the printed circuit boards (16a, 16b) themselves to make contact against the internal push-button (20) of the vending machine. This is why the printed circuit boards (16a, 16b) have been designed with their central contact area (17a) component-free, so that contact of the printed circuit boards (16a, 16b) with the internal push-button (20) is against a flat area, preventing any component of the printed circuit boards (16a, 16b) from deteriorating after multiple pushes.

Therefore, the printed circuit boards (16a, 16b) comprise in the central part the contact area (17) to enable the selection button or push-button (20) of the keypad of the vending machine to be actuated without deteriorating the electronics assembly as shown in Figures 5A and 5B. The selection buttons or push-buttons (20) are shown in Figure 8. In some examples, the contact area (17) of the boards (16a, 16b) comprises a silicone sheet (or similar) for even further dissipating the force applied when pushing, and thereby reinforcing said boards.

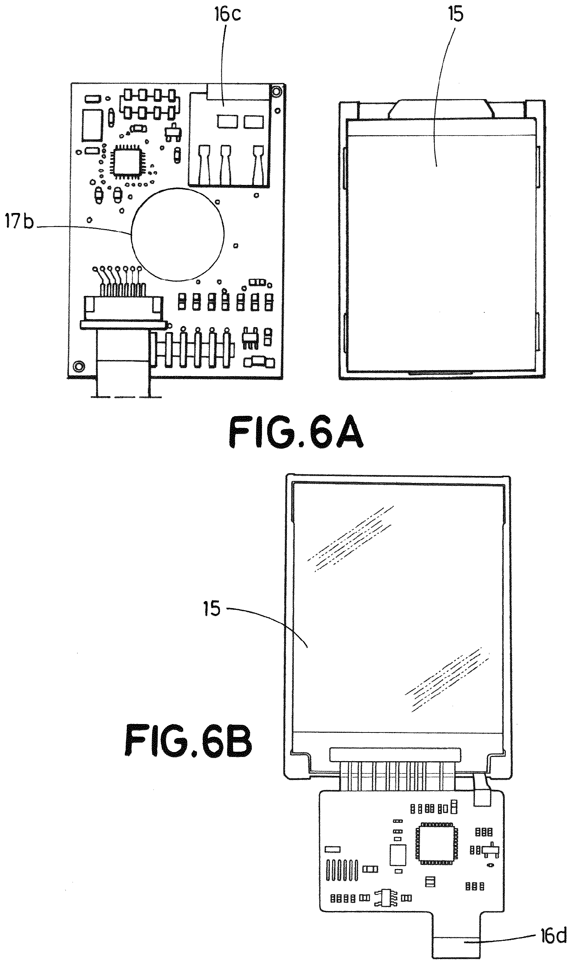

Figure 6 shows a second alternative of printed circuit board 16(c) for the multimedia button (10). The printed circuit board (16c) comprises a central orifice (17b), wherein a force applied on the button (10) causes the activation of the push-button (20) by means of the contact of the back portion of the display (15) with said push-button (20) through the central orifice (17b).

In this embodiment of Figure 6A, the multimedia button device (10) further comprises a sealing element and wherein said central orifice (17b) is sealable by means of said sealing element with a rubber, plastic, metal or similar element.

Figure 6B shows a third alternative, wherein the multimedia button device (10) comprises a third board (16d) which is out of the actuation area between the display (15) and the push-button (20). In some embodiments, said board may comprise flexible material.

Figure 7 shows a multimedia button (10) according to the present invention comprising the first alternative of the printed circuit board (16a, 16b) which comprises a contact area (17a) which is depicted in Figure 7A in a dotted line. Furthermore, in this embodiment, the multimedia button (10) comprises a push detector (18) located on the printed circuit board (16a, 16b) or on the display and between the push-button of the tobacco vending machine and the display (15). Said push detector (18) allows registering the push of the multimedia button.

Figure 7B shows a multimedia button (10) according to the present invention comprising the second alternative of the printed circuit board (16c) which comprises the central orifice (17b). Furthermore, the multimedia button of Figure 7A further comprises a push detector (18) located on the printed circuit board (16a, 16b) and between the push-button of the tobacco vending machine and the display (15). Said push detector (18) allows registering the push of the multimedia button.

Figure 8 shows a depiction of the multimedia system (100) for vending machines according to the present invention. The system (100) comprises 20 multimedia button devices (10), a master controller (40) for the set of multimedia button devices (10), and guided transmission means for communication between the master controller (40) and the set of multimedia button devices (10) and between the master controller (40).

The guided transmission means comprise from one to seven redirection circuits of serial port information (30) for connecting all the buttons in one row and allows distributing the signals and reducing the number of cables that can be seen in the vending machine. Each one of the redirection circuits of serial port information, such as multiplexer circuits (30) may allow, according to the number of columns of the vending machine, for example 3, 4 or 5 columns, that is, 3, 4 or 5 multimedia buttons per row.

The multiplexers (30) (combinatorial circuits with several data inputs and a single data output) are capable of distributing two pieces of data (data inputs) to the correct display (output) of the predetermined multimedia button (10). The use of multiplexers (30) allows reducing the number of data communication cables between the displays of the multimedia buttons and the motherboard. The use of multiplexers (30) is the preferred development, without excluding the use of other forms of microprocessor or microcontroller data communication without excluding other CPUs of the master controller (40) to the displays. Basically, it is about redirection of serial port information without excluding other means other than multiplexers.

The preferred (but not exclusive) form of data communication for the circuit of Figure 5B would be SPI and the communication format for circuit 5A would be serial ports (UART, SPI, I2C...), and for the circuit of Figure 6, any communication format.

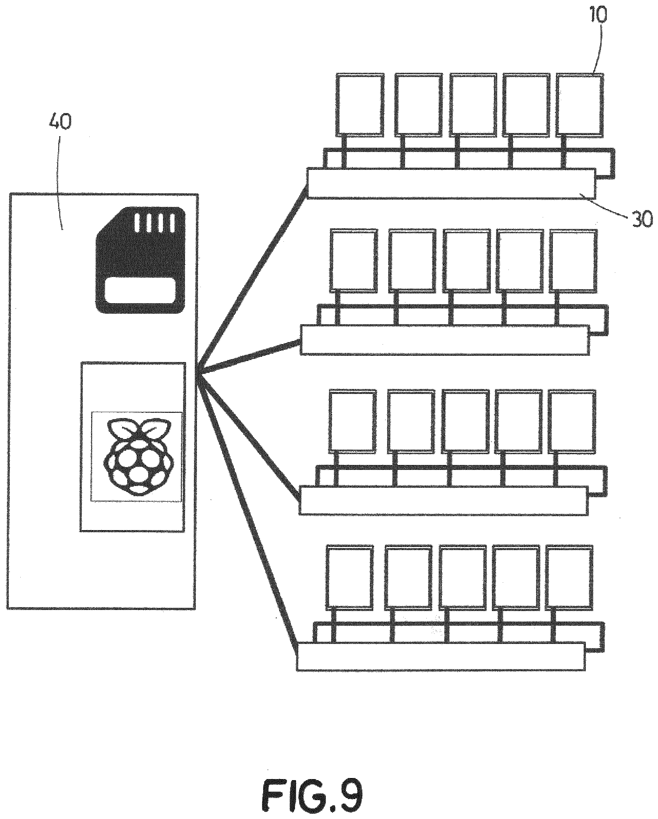

Figure 9 shows the multimedia system (100) for vending machines according to the present invention implemented in a vending machine. The system comprises, by way of example, from 15 to 35 multimedia button devices (10), a master controller (40) for the set of multimedia button devices (10), and the guided transmission means comprising from 1 to 5 redirection circuits of serial port information such as for example multiplexer circuits (30) for communication between the master controller (40) and the set of multimedia button devices (10) and between the master controller (40). The multimedia system (100) of Figure 9 is connected to a computing unit (110) of a vending machine common on the European market. Additionally, the system (100) is in communication with the computing unit (110). Therefore, communication between the master controller (40), the 20 multimedia button devices (10), and the computing unit (110) of the vending machine enables two-way telemetry to be performed for controlling product stock, managing incidents, malfunctions, and any data contained in the central computing unit (110) of the vending machine. The master controller (40) can access any data of the point of sale where it has been installed and the operation of the machine is neither modified nor altered.

Additionally, the master controller (40) comprises wireless transmission means, such as WI-FI, Bluetooth or NFC, GPRS, LTE, for example, without excluding other means for transmitting information with a remote computer (50) which can implement software associated with the multimedia system (100) according to the present invention.

## Claims

1. A multimedia button device (10) for a vending machine, wherein the vending machine comprises at least one push-button (20) and wherein the multimedia button device (10) is located on said push-button,
the multimedia button device (10) **characterised in that** it comprises:
- a display (15); and
- a first printed circuit board (16a, 16b) comprising:
a central contact area (17a) for activating the push-button (20) of the vending machine, and
wherein a force applied on the multimedia button device (10) causes the activation of the push-button (20) by means of contact of the first printed circuit board (16a, 16b) with said push-button (20) through the contact area (17a); or
- a second printed circuit board (16c) comprising:
a central orifice (17b), and
wherein a force applied on the multimedia button device (10) causes the activation of the push-button (20) by means of the contact of the display (15) with said push-button (20) through the central orifice (17b); or
- a third printed circuit board (16d),
wherein the display (15) and the push-button (20) define an actuation area wherein the display (15) activates the push-button (20) by means of the contact of the display (15) with said push-button (20), and wherein the multimedia button device (10) comprises the third printed circuit board (16d) outside of the actuation area,
wherein the first, second and third boards (16a, 16b, 16c, 16d) are located in the rear part of the display (15), and
the display (15) and the first, second and third boards (16a, 16b, 16c, 16d) make up an assembly.

2. The multimedia button device (10) according to claim 1, further comprising a sealing element when the multimedia button device (10) comprises the second printed circuit board (16c), and wherein said central orifice (17b) is sealable by means of said sealing element.

3. The multimedia button device (10) according to claims 1 or 2, further comprising a push detector (18).

4. The multimedia button device (10) according to the preceding claims, further comprising an open quadrangular casing (11) comprising a transparent face (12), and an inner frame (13),
wherein the assembly formed by the display (15) and the first, second and third boards (16a, 16b, 16c, 16d) is positioned on the inner frame (13) of the casing (11); and
wherein the display (15) is fixed to the inner frame (13) by means of the fixing means such that the display (15) is facing the transparent face (12) of the casing (11).

5. The multimedia button device (10) according to claim 4,
wherein the casing comprises an actuator element, and
wherein the force applied on the multimedia button device (10) causes the activation of the push-button (20) by means of contact of the actuator element with said push-button (20).

6. The multimedia button device (10) according to claims 4 or 5, wherein the fixing means comprise two clips (14).

7. The multimedia button device (10) according to claims 4 to 6, wherein the casing (11) further comprises two windows (14a); and/or the casing (11) comprises between 30 mm and 45 mm of width and 40 and 60 mm of height; and/or wherein the casing comprises:
- two clamping cylinders (9); or
- pivot means, preferably a lower rod,
which enable the support or positioning of the multimedia button device (10) in the vending machine.

8. The multimedia button device (10) according to the preceding claims, wherein the first, second and third printed circuit boards (16a, 16b, 16c, 16d) comprise computer media for projecting images and/or videos on the display (15).

9. The multimedia button device (10) according to the preceding claims, wherein the casing (11) comprises a lower opening (14b) and an upper opening (14c).

10. The multimedia button device (10) according to claim 1, wherein the contact area (17a) or the display (15) comprise a sheet of silicone, shellac or other protective means including a plastic surface.

11. A multimedia system (100) for a vending machine comprising a computing unit (110), **characterised in that** the system (100) comprises:
- a set of multimedia button devices (10) according to claims 1 to 10,
- a master controller (40) for the set of multimedia button devices (10), and
- guided transmission means for communication between the master controller (40) and the set of multimedia button devices (10) and between the master controller (40) and the computing unit of the vending machine (110).

12. The multimedia system (100) according to claim 11, wherein the set of multimedia button devices (10) comprises:
between 1 and 16 rows of multimedia button devices (10); and
from 1 to 16 multimedia button devices (10) per row.

13. The multimedia system (100) according to claim 12, wherein the transmission means for communication between the master controller (40) and the set of multimedia button devices (10) comprise between 1 and 16 redirection circuits of serial port information, preferably multiplexers (30), wherein each multiplexer (30) is associated with up to 16 multimedia button devices (10).

14. The multimedia system (100) according to claims 11 to 13, wherein the master controller (40) comprises wireless transmission means which allow the communication of the master controller with a remote server (50).

15. A method for the installation of a set of multimedia button devices (10) according to claims 1 to 10 in a vending machine, wherein the multimedia buttons are associated with redirection systems of serial port information, which may be without excluding other means multiplexing, the vending machine comprising a frame and a front door where there is arranged a set of conventional buttons located on push-buttons, the method comprising:
- moving the door of the vending machine between 1 and 30 millimetres;
- replacing the set of conventional buttons with the set of multimedia buttons;
- fixing the redirection systems of serial port information, which may be without excluding other means multiplexing, without excluding others by means of anchoring elements; and preferably,
- using a locking system for moving the door of the vending machine.

## Patentansprüche

1. Multimediatastenvorrichtung (10) für einen Verkaufsautomaten, wobei der Verkaufsautomat mindestens eine Drucktaste (20) aufweist und wobei die Multimediatastenvorrichtung (10) auf der Drucktaste angeordnet ist,
wobei die Multimediatastenvorrichtung (10) **dadurch gekennzeichnet ist, dass** sie aufweist:
- eine Anzeige (15), und
- eine erste gedruckte Leiterplatte (16a, 16b), die aufweist:
eine zentrale Kontaktfläche (17a) zur Betätigung der Drucktaste (20) des Verkaufsautomaten, und
wobei eine auf die Multimediatastenvorrichtung (10) ausgeübte Kraft die Aktivierung der Drucktaste (20) durch einen Kontakt der ersten Leiterplatte (16a, 16b) mit der Drucktaste (20) über den Kontaktbereich (17a) bewirkt, oder
- eine zweite Leiterplatte (16c), die aufweist:
eine zentrale Öffnung (17b), und
wobei eine auf die Multimediatastenvorrichtung (10) ausgeübte Kraft die Aktivierung der Drucktaste (20) durch den Kontakt der Anzeige (15) mit der Drucktaste (20) durch die zentrale Öffnung (17b) bewirkt, oder
- eine dritte gedruckte Leiterplatte (16d),
wobei die Anzeige (15) und die Drucktaste (20) einen Betätigungsbereich bestimmen, wobei die Anzeige (15) die Drucktaste (20) durch den Kontakt der Anzeige (15) mit der Drucktaste (20) aktiviert, und wobei die Multimediatastenvorrichtung (10) die dritte gedruckte Leiterplatte (16d) außerhalb des Betätigungsbereichs aufweist,
wobei die erste, zweite und dritte Leiterplatte (16a, 16b, 16c, 16d) in dem hinteren Teil der Anzeige (15) angeordnet sind, und
die Anzeige (15) und die erste, zweite und dritte Leiterplatte (16a, 16b, 16c, 16d) eine Baugruppe bilden.

2. Multimediatastenvorrichtung (10) nach Anspruch 1, die ferner ein Dichtungselement aufweist, wenn die Multimediatastenvorrichtung (10) die zweite Leiterplatte (16c) aufweist, und wobei die zentrale Öffnung (17b) mit Hilfe des Dichtungselements verschließbar ist.

3. Multimediatastenvorrichtung (10) nach Anspruch 1 oder 2, die außerdem einen Druckdetektor (18) aufweist.

4. Multimediatastenvorrichtung (10) nach einem der vorhergehenden Ansprüche, die ferner ein offenes viereckiges Gehäuse (11) aufweist, das eine transparente Fläche (12) und einen inneren Rahmen (13) aufweist,
wobei die durch die Anzeige (15) und die erste, zweite und dritte Leiterplatte (16a, 16b, 16c, 16d) gebildete Baugruppe auf dem inneren Rahmen (13) des Gehäuses (11) angeordnet ist, und
wobei die Anzeige (15) an dem inneren Rahmen (13) mittels der Befestigungsmittel auf eine solche Weise befestigt ist, dass die Anzeige (15) der transparenten Fläche (12) des Gehäuses (11) zugewandt ist.

5. Multimediatastenvorrichtung (10) nach Anspruch 4,
wobei das Gehäuse ein Betätigungselement aufweist, und
wobei die auf die Multimediatastenvorrichtung (10) ausgeübte Kraft die Aktivierung der Drucktaste (20) durch den Kontakt des Betätigungselements mit der Drucktaste (20) bewirkt.

6. Multimediatastenvorrichtung (10) nach Anspruch 4 oder 5, wobei das Befestigungsmittel zwei Klammern (14) aufweist.

7. Multimediatastenvorrichtung (10) nach einem der Ansprüche 4 bis 6, wobei das Gehäuse 20 (11) ferner zwei Fenster (14a) aufweist, und/oder das Gehäuse (11) eine Breite zwischen 30 mm und 45 mm und eine Höhe zwischen 40 mm und 60 mm aufweist, und/oder wobei das Gehäuse aufweist:
- zwei Spannzylinder (9), oder
- Schwenkmittel, vorzugsweise eine untere Stange,
die das Halten oder das Positionieren der Multimediatastenvorrichtung (10) in dem Verkaufsautomaten ermöglichen.

8. Multimediatastenvorrichtung (10) nach einem der vorhergehenden Ansprüche, wobei
die erste, zweite und dritte Leiterplatte (16a, 16b, 16c, 16d) Computermedien zur Projektion von Bildern und/oder Videos auf die Anzeige (15) aufweisen.

9. Multimediatastenvorrichtung (10) nach einem der vorhergehenden Ansprüche, wobei das Gehäuse (11) eine untere Öffnung (14b) und eine obere Öffnung (14c) aufweist.

10. Multimediatastenvorrichtung (10) nach Anspruch 1, wobei die Kontaktfläche (17a) oder die Anzeige (15) eine Schicht aus Silikon, Schellack oder einem anderen Schutzmittel einschließlich einer Kunststoffoberfläche aufweist.

11. Multimediasystem (100) für einen Verkaufsautomaten mit einer Recheneinheit (110), **dadurch gekennzeichnet, dass** das System (100) aufweist:
- einen Satz an Multimediatastenvorrichtungen (10) nach einem der Ansprüche 1 bis 10,
- eine Hauptsteuerung (40) für den Satz der Multimediatastenvorrichtungen (10), und
- geführte Übertragungsmittel zur Kommunikation zwischen der Hauptsteuerung (40) und dem Satz der Multimediatastenvorrichtungen (10) und zwischen der Hauptsteuerung (40) und der Recheneinheit des Verkaufsautomaten (110).

12. Multimediasystem (100) nach Anspruch 11, wobei der Satz der Multimediatastenvorrichtungen (10) aufweist:
zwischen 1 und 16 Reihen der Multimediatastenvorrichtungen (10), und von 1 bis 16 Multimediatastenvorrichtungen (10) pro Reihe.

13. Multimediasystem (100) nach Anspruch 12, wobei die Übertragungsmittel zur Kommunikation zwischen der Hauptsteuerung (40) und dem Satz der Multimediatastenvorrichtungen (10) zwischen 1 und 16 Umleitungsschaltungen für serielle Anschlussinformationen, bevorzugt Multiplexer (30), aufweisen, und wobei jeder Multiplexer (30) mit bis zu 16 Multimediatastenvorrichtungen (10) verbunden ist.

14. Multimediasystem (100) nach einem der Ansprüche 11 bis 13, wobei die Hauptsteuerung (40) drahtlose Übertragungsmittel aufweist, welche die Kommunikation der Hauptsteuerung mit einem entfernten Server (50) ermöglichen.

15. Verfahren zur Installation eines Satzes an Multimediatastenvorrichtungen (10) nach einem der Ansprüche 1 bis 10 in einem Verkaufsautomaten, wobei die Multimediatasten mit Umleitungssystemen für serielle Anschlussinformationen verbunden sind, die ohne einen Ausschluss anderer Mittel Multiplexer sein können, wobei der Verkaufsautomat einen Rahmen und eine Vordertür aufweist, in der ein Satz an herkömmlichen Tasten angeordnet ist, die auf Drucktasten angeordnet sind, wobei das Verfahren aufweist:
- ein Bewegen der Tür des Verkaufsautomaten um 1 bis 30 Millimeter,
- ein Ersetzen des Satzes der herkömmlichen Tasten durch den Satz der Multimediatasten,
- ein Befestigen der Systeme zur Umleitung der Informationen des seriellen Anschlusses, die ohne Ausschluss anderer Mittel Multiplexer sein können, ohne Ausschluss anderer Mittel von Verankerungselementen, und bevorzugt,
- ein Verwenden eines Verriegelungssystems zum Bewegen der Tür des Verkaufsautomaten.

## Revendications

1. Dispositif à bouton multimédia (10) pour un distributeur automatique, dans lequel le distributeur automatique comprend au moins un bouton-poussoir (20) et dans lequel le dispositif à bouton multimédia (10) est situé sur ledit-bouton-poussoir,
le dispositif à bouton multimédia (10) étant **caractérisé en ce qu'**il comprend :
- une unité d'affichage (15) ; et
- une première carte de circuit imprimé (16a, 16b) comprenant :
une zone de contact centrale (17a) pour activer le bouton-poussoir (20) du distributeur automatique, et
dans lequel une force appliquée sur le dispositif à bouton multimédia (10) entraîne l'activation du bouton-poussoir (20) à l'aide d'un contact de la première carte de circuit imprimé (16a, 16b) avec ledit bouton-poussoir (20) par le biais de la zone de contact (17a) ; ou
- une deuxième carte de circuit imprimé (16c) comprenant :
un orifice central (17b), et
dans lequel une force appliquée sur le dispositif à bouton multimédia (10) entraîne l'activation du bouton-poussoir (20) à l'aide du contact de l'unité d'affichage (15) avec ledit bouton-poussoir (20) par le biais de l'orifice central (17b) ; ou
- une troisième carte de circuit imprimé (16d),
dans lequel l'unité d'affichage (15) et le bouton-poussoir (20) définissent une zone d'actionnement dans lequel l'unité d'affichage (15) active le bouton-poussoir (20) à l'aide du contact de l'unité d'affichage (15) avec ledit bouton-poussoir (20), et
dans lequel le dispositif à bouton multimédia (10) comprend la troisième carte de circuit imprimé (16d) à l'extérieur de la zone d'actionnement,
dans lequel les première, deuxième et troisième cartes de circuit imprimé (16a, 16b, 16c, 16d) sont situées dans la partie arrière de l'unité d'affichage (15), et
l'unité d'affichage (15) et les première, deuxième et troisième cartes de circuit imprimé (16a, 16b, 16c, 16d) composent un ensemble.

2. Dispositif à bouton multimédia (10) selon la revendication 1, comprenant en outre un élément d'étanchéité lorsque le dispositif à bouton multimédia (10) comprend la deuxième carte de circuit imprimé (16c), et dans lequel ledit orifice central (17b) peut être hermétiquement fermé au moyen dudit élément d'étanchéité.

3. Dispositif à bouton multimédia (10) selon la revendication 1 ou 2, comprenant en outre un détecteur de poussée (18).

4. Dispositif à bouton multimédia (10) selon les revendications précédentes, comprenant en outre un boîtier quadrangulaire ouvert (11) comprenant une face transparente (12), et un cadre intérieur (13),
dans lequel l'ensemble formé par l'unité d'affichage (15) et les première, deuxième et troisième cartes de circuit imprimé (16a, 16b, 16c, 16d) est positionné sur le cadre intérieur (13) du boîtier (11) ; et
dans lequel l'unité d'affichage (15) est fixée au cadre intérieur (13) à l'aide du moyen de fixation de telle sorte que l'unité d'affichage (15) fait face à la face transparente (12) du boîtier (11).

5. Dispositif à bouton multimédia (10) selon la revendication 4,
dans lequel le boîtier comprend un élément actionneur, et dans lequel la force appliquée sur le dispositif à bouton multimédia (10) entraîne l'activation du bouton-poussoir (20) à l'aide d'un contact de l'élément actionneur avec ledit bouton-poussoir (20).

6. Dispositif à bouton multimédia (10) selon la revendication 4 ou 5, dans lequel le moyen de fixation comprend deux clips (14).

7. Dispositif à bouton multimédia (10) selon les revendications 4 à 6, dans lequel le boîtier (11) comprend en outre deux fenêtres (14a) ; et/ou le boîtier (11) comprend une largeur entre 30 mm et 45 mm et une hauteur entre 40 et 60 mm ; et/ou dans lequel le boîtier comprend :
- deux cylindres de serrage (9) ; ou
- un moyen formant pivot, de préférence une broche inférieure,
qui permettent le support ou positionnement du dispositif à bouton multimédia (10) dans le distributeur automatique.

8. Dispositif à bouton multimédia (10) selon les revendications précédentes, dans lequel les première, deuxième et troisième cartes de circuit imprimé (16a, 16b, 16c, 16d) comprennent des supports informatiques destinés à projeter des images et/ou vidéos sur l'unité d'affichage (15).

9. Dispositif à bouton multimédia (10) selon les revendications précédentes, dans lequel le boîtier (11) comprend une ouverture inférieure (14b) et une ouverture supérieure (14c).

10. Dispositif à bouton multimédia (10) selon la revendication 1, dans lequel la zone de contact (17a) ou l'unité d'affichage (15) comprend une feuille de silicone, de la gomme-laque ou un autre moyen de protection comportant une surface en plastique.

11. Système multimédia (100) pour un distributeur automatique comprenant une unité informatique (110), **caractérisé en ce que** le système (100) comprend :
- un jeu de dispositifs à bouton multimédia (10) selon les revendications 1 à 10,
- un dispositif de commande maître (40) pour le jeu de dispositifs à bouton multimédia (10), et
- un moyen de transmission guidé pour communication entre le dispositif de commande maître (40) et le jeu de dispositifs à bouton multimédia (10) et entre le dispositif de commande maître (40) et l'unité informatique du distributeur automatique (110).

12. Système multimédia (100) selon la revendication 11, dans lequel le jeu de dispositifs à bouton multimédia (10) comprend :
entre 1 et 16 rangées de dispositifs à bouton multimédia (10) ; et
de 1 à 16 dispositifs à bouton multimédia (10) par rangée.

13. Système multimédia (100) selon la revendication 12, dans lequel le moyen de transmission pour communication entre le dispositif de commande maître (40) et le jeu de dispositifs à bouton multimédia (10) comprend entre 1 et 16 circuits de redirection d'informations de port série, de préférence des multiplexeurs (30), dans lequel chaque multiplexeur (30) est associé à jusqu'à 16 dispositifs à bouton multimédia (10).

14. Système multimédia (100) selon les revendications 11 à 13, dans lequel le dispositif de commande maître (40) comprend un moyen de transmission sans fil qui permet la communication du dispositif de commande maître avec un serveur à distance (50).

15. Procédé pour l'installation d'un jeu de dispositifs à bouton multimédia (10) selon les revendications 1 à 10 dans un distributeur automatique, dans lequel les boutons multimédia sont associés à des systèmes de redirection d'informations de port série, qui peuvent être sans exclure d'autres moyens de multiplexage, le distributeur automatique comprenant un cadre et une porte avant où est agencé un jeu de boutons classiques situés sur des boutons-poussoirs, le procédé comprenant :
- le déplacement de la porte du distributeur automatique entre 1 et 30 millimètres ;
- le remplacement du jeu de boutons classiques par le jeu de boutons multimédia ;
- la fixation des systèmes de redirection d'informations de port série, qui peuvent être sans exclure d'autres moyens de multiplexage, sans exclure d'autres à l'aide d'éléments d'ancrage ; et de préférence,
- l'utilisation d'un système de verrouillage pour déplacer la porte du distributeur automatique.
